# EUROPEAN PATENT SPECIFICATION

(11) **EP 2 430 901 B1**
(45) Date of publication and mention of the grant of the patent: **28.08.2013**
(21) Application number: 11181583.3
(22) Date of filing: 16.09.2011
(51) Int. Cl.: A01D 78/10, A01D 75/30

(54) **Agricultural machine**
Landwirtschaftliche Maschine
Machine agricole

(30) Priority: 16.09.2010 NL 1038246
(43) Date of publication of application: 21.03.2012
(73) Proprietor: Forage Innovations B.V., 3147 PA Maassluis (NL)
(72) Inventor: Van der Lelij, Bart, 3216 LG Abbenbroek (NL)
(74) Representative: Jennen, Peter Leonardus Hendricus

(56) References cited:
- EP-A1- 0 455 022
- EP-A1- 1 618 778
- EP-A1- 1 946 633
- WO-A1-88/05998
- FR-A1- 2 725 340

## Description

The present invention relates to an agricultural machine, in particular to a haymaking machine such as a rake or a tedder. Further, the present invention relates a wheel mounting assembly for such a machine.

Agricultural machines such as haymaking machines generally comprise a frame and at least one working tool connected to the frame. Such a machine can for example be attached to a pulling vehicle, such as a tractor so that it can be moved across a terrain and usually comprises one or more rotary crop working tools, the machine further comprising, a main support frame, ground engaging support wheels for supporting the main support frame on the ground and a carriage comprising a chassis, having a wheel mounting assembly connecting at least one running wheel to the chassis.

It is desirable for the working implements of the tool such as e.g. rake or tedder tines to closely follow the terrain or ground contour, without actually contacting the ground, and thus during operation keep optimal contact with the crop in order to have maximal yield.
It is also desirable that relative small obstacles that are encountered during travel by the ground engaging support wheels of the agricultural machine do not adversely effect its proper functioning.

Closely following the ground's contour is especially important for machines with a large effective working area. the crop working tools in case of a haymaking machine are for that reason provided with one or more one support wheels that are arranged to follow the contour of the terrain such that the crop working tool is kept in close contact with the crop. For example with agricultural machines having rotary crop working tools comprising tines the crop working tool is attached to the machine frame, wherein a support carriage is provided underneath the crop working tool with a chassis and one or more support wheels mounted to the chassis. The support wheels during use are able to follow the contour of the terrain and thus the chassis of the carriage carrying the crop working tool will also follow the terrain.

To provide the agricultural machine with good ground-following characteristics, it is common to mount the support wheels to the chassis such that they have two degrees of freedom (DOF). This provides the crop working tool with two degrees of freedom with respect to the chassis. A first DOF can be a possibility to rotate the support wheels about a vertical axis, to allow steering. A second DOF can for example by a possibility to rotate the support wheels about a horizontal axis to allow the wheels to pivot or roll about a central point so as to halve the distance the tool is lifted when a wheel moves over a bump.

An agricultural machine having the aforementioned features is for example known from and illustrated in EP0455022. EP0455022 discloses an agricultural machine, in particular a hay harvesting machine, comprising ground engaging support wheels that are located beneath a rotary crop working tool (a rake). The ground engaging support wheels are arranged in pairs. Each wheel pair is rotatingly mounted on a common horizontal wheel axle. This common wheel axle is swivably mounted about a vertical axle. The swivable connection is further realized by means of a second horizontal axle that is arranged at right angles to the wheel axle. Further a brake is provided that limits the swivel movement about the second horizontal axle, which influences the self-steering properties of each pair of wheels. The wheel mounting assembly of EP0455022 exhibits castor-like steerability of each pair of wheels. Additionally when one wheel of a paired set of wheels hits an obstacle the pair rolls or swivels about the horizontal support axle which extends in the direction of travel halving the distance the rotor would have been lifted without this feature.

Thus effectively the wheel mounting assembly of EP0455022 assigns each wheel two degrees of freedom relative to the carriage. Each wheel can by means of its wheel mount roll about a horizontal axis which extends transverse to the axis of rotation of the wheel pair, i.e. the roll axis extends parallel to the direction of travel of the machine. This allows the wheel pair to roll when one of the wheels hits a bump. Additionally each wheel is steerable by the pair being able to swivel about a vertical axis.

EP1946633 discloses a further haymaking machine comprising a carriage having a total of six support wheels. the support wheels are grouped in three pairs such that each pair of wheels is mounted to a tandem axle that can pivot about a swing axle and additionally at least one of the wheels of each pair is steerably mounted about a vertical axle. Of the front pair both wheels are steerably mounted about a vertical axle.

A drawback of the known agricultural machines is that they are complicated to assemble and have a lot of parts. EP045022 for example requires three separate axles and associated bearings and a brake for each wheel set. These brakes can be adjusted to the desired steerability, which may cause unbalance in the respective steerability when the brake forces vary between the pairs.

An additional drawback is that these systems cannot be used in a machine where the tool is mounted with two DOF's relative to the main frame of the machine. Especially tandem axles can not be used in such a machine because in such a situation there is no defined relation between the movement of the wheels along the terrain and movement of the tool.

It is an object of the invention to alleviate said drawbacks and to at least provide an alternative to the known wheel mount assemblies which will be able to follow the ground contour of the land at least equally well as the solutions of EP0455022 and/or EP1946633, but will be easier to assembly and requires fewer parts.

This object is achieved by providing an agricultural machine such as a rake or a tedder having one or more rotary crop working tools, wherein the machine further comprises a main support frame, ground engaging support wheels for supporting the main support frame on the ground. The machine further has a carriage comprising a chassis and a wheel mounting assembly connecting at least one running wheel to the chassis. The wheel mounting assembly comprises a hinge that comprises at least a ball joint having three degrees of freedom. Said hinge is mounted to the chassis and is operably connected to the at least one running wheel. Further a restraining device is provided that is connected to the hinge, wherein the restraining device is arranged to limit, at least one of the three degrees of freedom of the ball joint of the hinge.

Thus a wheel mounting assembly is provided that is easier to assemble and has less parts than the prior art assemblies while the desired capability of following the ground contour is not compromised.

The restraining device may limit pitching movements of the running wheel relative to the chassis and with respect to a horizontal axis extending parallel to the axis of rotation of the running wheel or wheels. When the movement that is limited is the so-called pitching movement about a horizontal axis transverse to the direction of travel. Thus one of the remaining two degrees of freedom is that of movement about a horizontal axis that extends substantially transvers to the horizontal axis of rotation of the wheel, i.e. this degree of freedom allows the wheel to rolling about a horizontal axis substantially in the direction of travel and relative to the chassis. This term is not to be mistaken as rotation of the wheel about its axle. Effectively rolling of the wheel will allow the wheel to ride over an obstacle and the chassis to which the wheel is mounted is lifted only half the height of what it would have been lifted if this degree of freedom was not available. The other of the remaining DOF's is that of movement about a vertical axis of rotation, thus the wheel is steerable.

The chassis may include an elongated leg and the ball joint may be mounted to the leg and the running wheel may be mounted to the leg to spaced apart from the ball joint. This way of mounting of the wheel spaced apart from the ball joint enhances the stability of the machine.

The chassis of the machine may have a working position where the ball joint is in front (upstream) of the axis of rotation of the running wheel when seen in the direction of travel of the machine. Mounting the ball joint such that it is in front of the axis of rotation of the running wheel or wheels in the direction of travel of the machine in working position enhances the steerability of the running wheel or wheels.

The ball joint may be mounted to an end of the leg.
Mounting the ball joint to an end of the leg simplifies the total construction of the wheel mount.

The restraining device may include a sleeve and at least one arm wherein the sleeve may be mounted about a portion of the chassis, and the axis of rotation of the running wheel or wheels may then be positioned between the sleeve and the ball joint, and the arm is preferably connected to both the ball joint and to the chassis. By this construction the pitching movement of the running wheel or wheels relative to the chassis is effectively limited by a simple and durable construction with few parts.

The portion of the chassis about which the sleeve is mounted can be a leg as part of the chassis. This is yet another demonstration of the ease by which the invention can be assembled.

The wheel mounting assembly may connect a second running wheel to the chassis and provide the second running wheel also with two degrees of freedom relative to the chassis such that the first and second running wheels form a pair of wheels with a common axis of rotation. A pair of wheels provides more stability then single steerable wheels.

The first and second running wheels may be rotatably mounted to a leg of the chassis such that there is a wheel on either side of the leg and the restraining device may include a further restraining arm and each of the wheels may then be mounted to one of the restraining arms such that the common axis of rotation is between the sleeve and the ball joint. By mounting the wheels on either side of the chassis enhances the stability of the device and by mounting the wheels to the arms a common axis of rotation may be present while a common wheel axle is not necessary which saves space and enhances possible variations in the shape of the chassis.

Advantageously the machine further includes a main frame and the chassis is connected to the main frame such that in operable condition the chassis has two degrees of freedom relative to the main frame and wherein only one of these degrees of freedom coincides with the two degrees of the running wheel or wheels relative to the chassis.
By having only one degree of freedom in common together with the two degrees of freedom that the running wheel(s) mounted to the chassis experience relative to the chassis, the chassis is now able to closely follow the terrain. More importantly the wheel mounting assembly of the invention allows this type of attachment of the chassis to the main frame while the known solutions of tandem axles of EP1946633 or the three axles of EP045022 are limited to machines where the chassis is rigidly connected to the frame. In a chassis that is hingedly attached to the main frame is still rigidly connected to the main frame because the hinge will not enhance the chassis' ability to follow the terrain. Such hinges only allow the chassis to be hinged up and out of its working position for transport.

Further advantageously the machine may further include a rotary crop tool connected to a main frame and the rotary crop tool may be connected to the chassis such that, in a working position, the chassis is disposed beneath the crop tool and the first running wheel contacts with the ground.
The crop tool of this machine will have the ability to closely following the ground's contours because of the way the running wheels are mounted to the chassis .

The rotary crop tool may in a working position be rotatable about a substantial vertical axis of rotation. This machine can be e.g. a rotary rake and by way of the way the running wheels are mounted to the chassis and the crop tool is moutned to the chassis and the main frame, the rake will in working position closely follow the contour of the ground.

The rotary crop tool may include crop working implements and the running wheel may be positioned adjacent the crop working implement without hindering operation of said implement. This is important especially in machines with a large working area, where by positioning the running wheel close to the crop working implements such as tines, the ground following characteristics of the machine are enhanced. The wheel will follow the contour and since the distance between the wheel and the tine is as small as possible this means that the tine will also follow the contour of the ground at least as well as the wheel does.

Advantageously the machine may include a plurality of wheel mounting assemblies connecting a plurality of running wheels to the chassis and the chassis may include a plurality of legs each leg being provided with at least one wheel mounting assembly.

Machines with large working areas such as e.g. large a rotary rakes with a large crop tool diameter such as with a rake rotor having e.g. eight "spoke"-arms to which rake implements are attached, can benefit by having a chassis having as many wheel carrying legs as the rake has "spoke"-arms. As a result each rake arm will have a running wheel closely positioned to it's rake tines. The large diameter can now be assisted to closely follow the ground contour. The stability of the machine and the rotary tools is enhanced while the ability to follow the ground is not adversely affected.

The machine preferably includes a main frame and the chassis may be connected to the main frame by an arm and the arm may be hingeably connected to the frame such that the chassis can be put in a first or working position where the running wheel is in contact with the ground and in a second or transport position where the arm is rotated about the hinge and the chassis and the running wheel are positioned remote from the ground. The agricultural machines need to travel the public roads in order to get to their working location and this can generally not be done unless the tools attached to the machine are put into a transporting position. By providing a hingeable connection between the chassis and the main frame the machine can fold the chassis in by which action the machine becomes small enough to travel the public roads.

Further aspects, embodiments and advantages of the invention will be apparent from the detailed description below of particular embodiments and the drawings thereof, in which:
Figure 1 is a top view of a first embodiment of the machine according to the invention with a pair of chassis each having a first pair of wheels attached to the chassis having two degrees of freedom relative to the chassis
Figure 2 is perspective detailed view of the front pair of wheels attached to a base frame leg of the chassis by means of a ball joint and restraining device, showing the ball joint, a restraining sleeve about the frame leg and a pair of left and right arms connecting the ball joint to the restraining sleeve.
Figure 3A is a cross-sectional view of the first embodiment of the restraining device for a base frame leg having a rectangular cross-sectional shape;
Figure 3B is a cross-sectional view of a second embodiment of the restraining device for a base frame leg having a round cross-sectional shape;
Figure 3C is a cross-sectional view of the second embodiment of the restraining device with a pair of wear rollers instead of a wear plate;
Figure 4 is a perspective top view the first embodiment of the of the first pair of wheels turned about a vertical axis illustrating steering of the first pair, and
Figure 5 is a perspective front view of the chassis with the first pair of wheels tilted about a horizontal axis illustrating rolling of the first pair

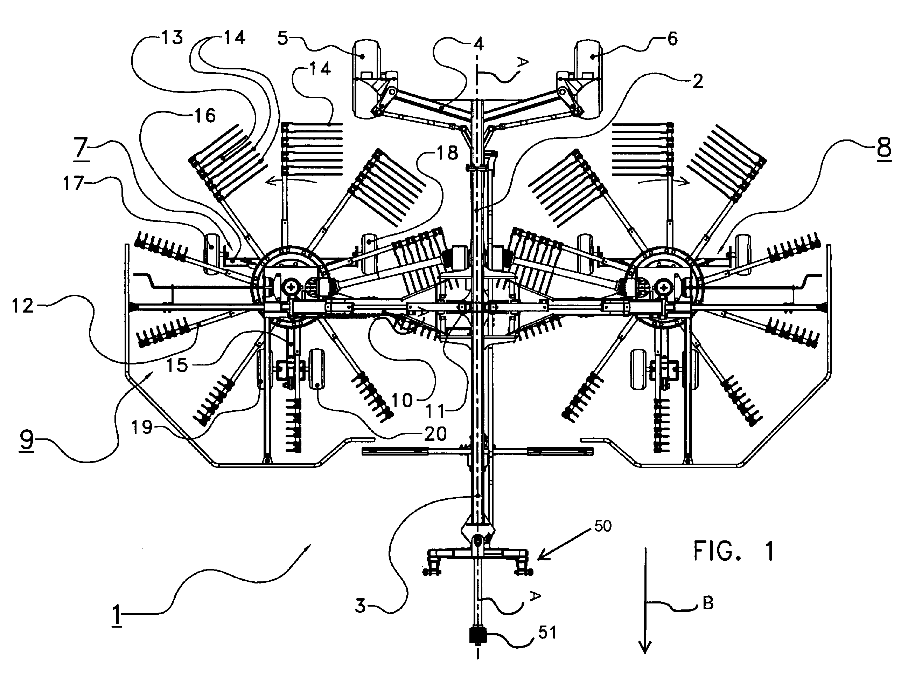

Figure 1 shows an agricultural machine 1 according to the invention having a main support frame 2 with a central frame member 3, defining a longitudinal axis A-A. At a first free end thereof the central frame member 2 is provided with coupling means 50. The coupling means 50 allow the agricultural machine 1 to be coupled to a (not shown) pulling vehicle, such as a tractor, in a manner that is known per se. The normal direction of travel when the agricultural machine 1 is used is indicated by means of arrow B in Figure 1. Near the coupling means 50 a coupling part 51 is provided that can be coupled to the PTO shaft of the pulling vehicle in a manner known per se. At an opposite free end of the central frame member 3 a carrier construction 4 is provided that extends away from the central frame member 3. The carrier construction 4 supports two rear support wheels 5, 6. Connected to central frame 3, one on each side of the central frame 3, are two identical carriages 7, 8. Since the agricultural machine 1 is symmetrical, as can be clearly seen in Figure 1, the agricultural machine 1 will hereinafter, where applicable, be described with reference to the left-hand side of the machine depicted in Figure 1. The carriages 7, 8 are each positioned beneath a crop working tool or rotor 9 which in turn is connected by means of an elongate rotor arm 10 and a hinge 11 to the central frame member 3. Although not further exemplified in the drawing, the rotor arms 10 on each side of the central frame member 3 can be swiveled upward and downward about the hinge 11, so as to take the agricultural machine 1 out of and into the working position shown in Figure 1. This is known per se to a person skilled in the art. The rotor 9 comprises a plurality of rake arms 12 to which rakes 13 are attached each having a plurality of tines 13. Each carriage 7, 8 includes a generally T-shaped chassis having a first chassis leg 15 that extends generally parallel to the longitudinal axis A-A, and extending at substantially right angles to the first chassis leg 15 a second chassis leg 16. Attached to the free ends or extremities of the second chassis leg 16 are ground engaging support wheels 17, 18 which are rotatably mounted thereto. The wheels 17, 18 are not steerable and the second leg 16 is rigidly connected to the first leg 15. Mounted on the free end of the first leg 15 is a further pair of ground engaging support wheels 19, 20. This further pair of wheels 19, 20 is steerable, i.e. can turn left and right, as will be explained in more detail hereinafter. Here it suffices to indicate that the further pair of support wheels 19, 20 are coupled to the first leg 15 by means of a hinge 21 that provides two DOF to the support wheels 19,20.

In the working position shown in Figure 1 the carriages 7, 8 and associated T-shaped chassis for the rotary crop tools 9 are located in a substantially horizontal plane on either side of the main frame 2. In this position the crop working tools 9 and its implements, i.e. the tines 14, are in contact with the crop and the wheels 17, 18, 19, 20 of the support carriages 7, 8 are in contact with the ground. In transport position, wherein the rotor arms 9 are hinged upward about the hinge 11, the T-shaped chassis, the support carriages 7, 8 and crop working tools 9 are lifted away from the ground and are in a substantially vertical plane on either side of the main frame 2. In this position the machine 1 occupies less space and can travel the public roads due to its reduced with.

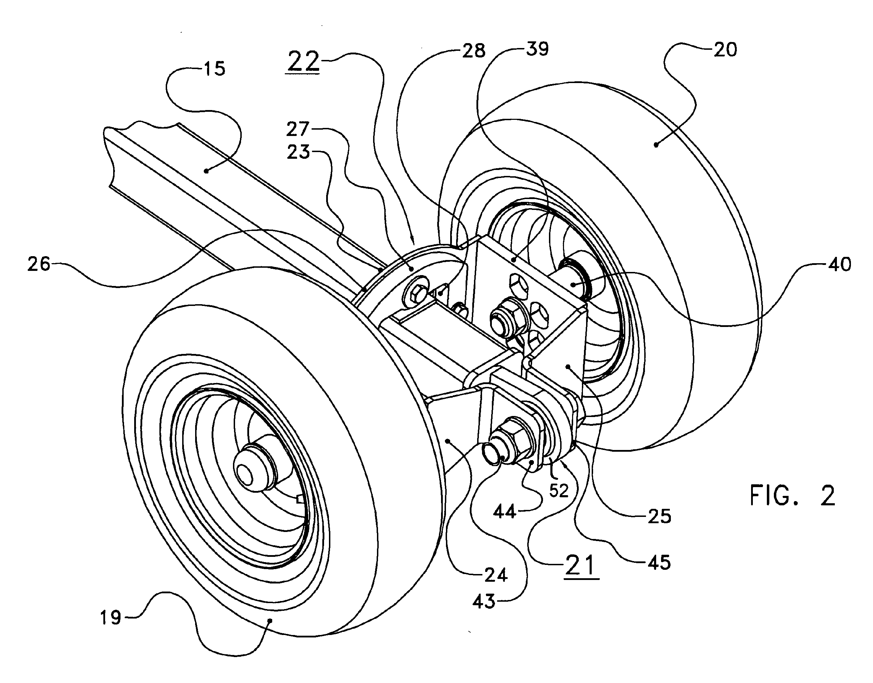

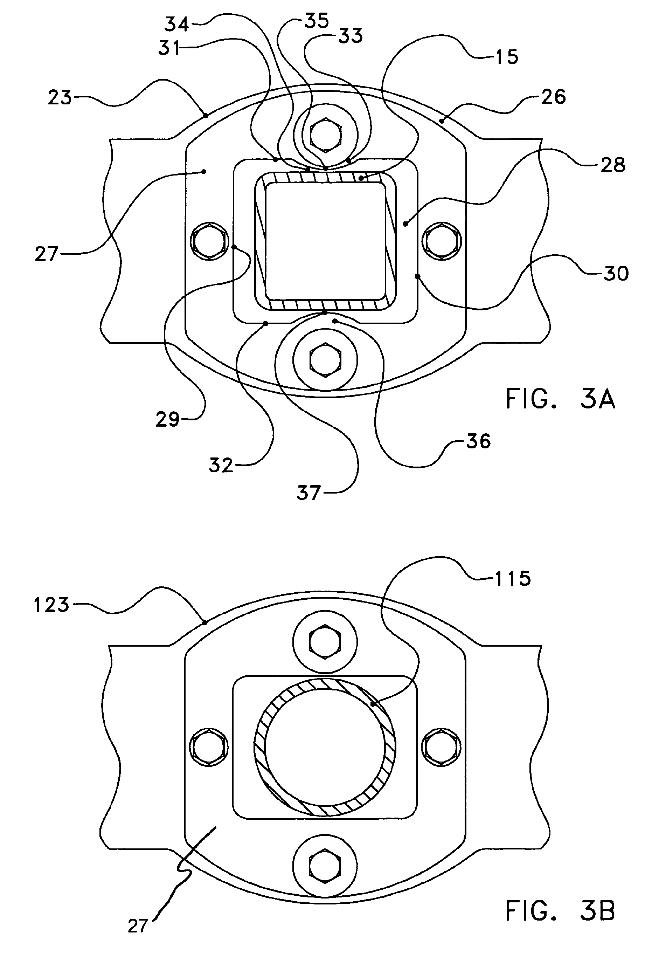

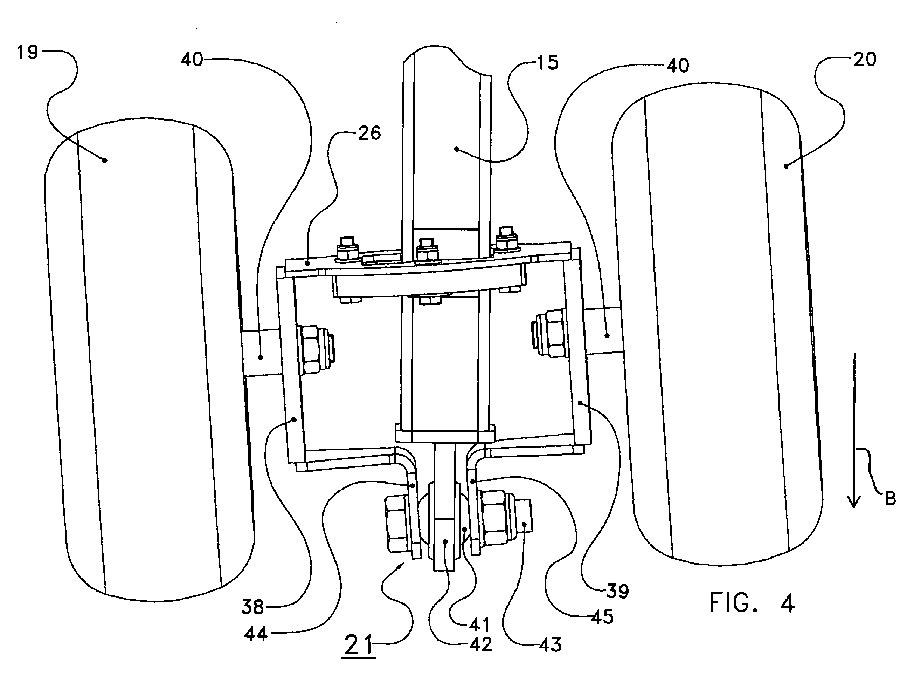

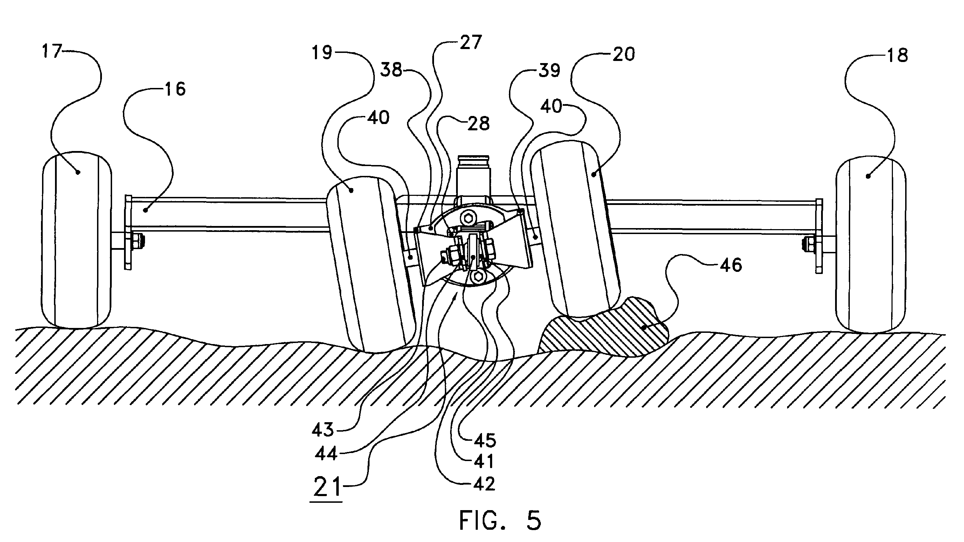

Figure 2, in a perspective view, and Figure 4 in top view, show in more detail how the further pair of ground engaging support wheels 19, 20 are connected to the first chassis leg 15 of the T-shaped chassis. The hinge 21 and in the form of a ball (and socket) joint is connected to the free end of the first leg 15. The hinge 21 comprises a socket 52 that extends from the free end of the leg 15. The socket 42 is provided with an opening (not visible in the drawing) in which a spherical or ball-shaped body 41 is introduced and through which a bolt 43 extends. The ball-shaped body 41 is mounted in the socket in a bearing manner so as to allow, in principle, movement in 3 DOF. The hinge 21 further comprises a first mounting flange 44 and a second mounting flange 45 that are coupled to the ball joint 41 by means of the bolt 43. The mounting flanges 44, 45 are folded into a generally L-shape member, having arms 24 and 25 respectively. The mounting flanges 44, 45 extend generally in a direction opposite to the normal direction of travel B. The hinge 21 further comprises two so-called axle plates 38 and 39 that are mounted to and extend from the mounting flanges 44 and 45 respectively, also in a direction opposite to the normal direction of travel B along at least part of the length of the leg 15. The axle plates 38, 39 each fixedly carry a stub-axle 40 to which the wheels 19, 20 are attached. As can be seen in the drawing the axle plates 38, 39 extend substantially parallel to the leg 15 in a distanced manner. Between the axle plates 38, 39 and distanced from the mounting flanges 44, 45 in longitudinal direction a restraining device 22 is provided. The restraining device 22 includes a sleeve 23 that crosses the distance between the axle plates 38, 39. The sleeve 23 comprises a central opening 28 through which the leg 15 extends. The central opening 28 is dimensioned such that the leg 15 can freely extend therethrough, in other words the cross-sectional area of the central opening 28 is larger than the cross-sectional area of the leg 15. A plastic wear plate 27 is attached to the inner surface of the sleeve 23, i.e. mounted on the surface thereof that faces towards the mounting flanges 44, 45 . The wear plate 27 surrounds the central opening 28 such that the leg 15 also freely extends through the wear plate 27. Referring now to Figures 3A to 3C, the inner contour of opening 28 of the sleeve 23 and the wear plate 27 is generally rectangular and has a pair of mutually opposing vertical sides 29, 30 and a pair of mutually opposing top and a bottom horizontal sides 31, 32. As best shown in figure 3A the top and bottom sides 31, 32 each have semi-circular projection 33, 36 having a curved shape forming small top and bottom contact areas 35, 37 that are located close to the outer surface of the leg 15. In order to avoid metal to metal contact the wear plate 27 is dimensioned such that it will be in contact with the leg 15, while the sleeve 23 is not in direct contact with the outer surface of the leg 15. The dimensions of the opening 28 are chosen with respect to the dimensions of the leg and the desired steerability of the pair of wheels. A bit of play 34 between the wear plate 27 and the leg 15 is present to allow assembly of the parts. Due to the dimensions of the opening 28 and the dimensions of the leg 15, the leg 15 is able to move about in the opening 28. The movement of the leg 15 inside the area, i.e. the opening 28, defined by the wear plate 27 in particular is limited. The amount of space between the outer surface of the leg 15 and the inner circumference of the opening 28 (as defined by the wear plate 27) allows for a restricted sideways movement and a restricted rotation about the longitudinal axis of the leg 15 of the hinge 21 and thus the wheels 19, 20. The sideways movement is depicted in Figure 4, where the wheels 19, 20 are slightly rotated counterclockwise with respect to the leg 15. The rotational movement, or roll movement, is depicted in Figure 5. It is noted here that the sideways movement of the leg 15 inside the opening 28 is substantially a rotational movement about a vertical axis through the ball 41.

The design of the opening 28 together with the wear plate 27 is therefore such, that the three degrees of freedom (3 DOF) that is in principle present in the hinge 21 (the ball and socket joint) are limited to 2 DOF.
In use the relatively small contact areas 35, 37 between the leg 15 and the wear plate 27 allow the sleeve 23 to rotate about a vertical axis or to roll about a horizontal axis relative to the leg until the sleeve hits the beam and arrests the movement. Thus these movements are limited in their stroke by the size of the opening 28 of the sleeve 23 in relation to the cross-sectional size of the leg 21. Pitching movements of the wheels 19, 20 relative to the carriage 7 and about an axis parallel to the axis of rotation of the wheels 19, 20, i.e. to an axis transverse to the direction of travel of the carriage, is limited by the restraining device 22. This pitching movement of the first pair of wheels can also be severely limited or essentially blocked by the restraining device 22. The more this pitching movement is limited the better the carriage will be able to follow the pitch of the terrain it travels over.

When the chassis is pulled to turn left or right, the left and right wheels 19, 20 at the front of the carriage being mounted to the restraining device arms can follow the turn because the ball 41 of the hinge 21 allows this movement. The sleeve 23 will rotate relative to the leg 15 about a vertical axis about the contact areas 35, 37 following the turning movement of the wheels. Figure 4 illustrates this situation.

Similarly, and illustrated in figure 5, when the chassis travels with left or right front wheel 19, 20 across a bump 46, the wheel hitting the bump is allowed to move up because the hinge 21 allows this movement. The sleeve 23 will roll about a horizontal axis on its contact areas 35, 37 following the roll of the wheels.

With reference to Figure 3A the leg 15 is shown as a beam having a rectangular or square cross section. It shall be clear however that the leg 15 can also have different cross-section, for example be a beam with a circular cross section 115 as shown in figure 3B. In that case the opening 28 with the wear plate 27 defining the opening 28 can be rectangular as shown in Figure 3B. There is no need for the protrusions as shown in Figure 3A as the outer surface of the leg 115 in this example allows the roll movement to be performed unhindered. Alternatively but not shown, the protrusions can also be provided on the outer surface of the leg 15. This gives the same results.

In yet a further alternative embodiment the projections 33, 34 on the wear plate 27 as shown in Figure 3A and even the complete wear plate 27 can be replaced by two plastic or rubber rollers 127A, 127B as is shown in Figure 3C.
Both rollers 127A, 127B are mounted to the sleeve 23 by suitable means. In figure 3C the rollers are illustrated to be mounted by means of a bolt and nut and are rotatable relative to the bolt. The rollers 127A, 127B can also be fixed so as not to be rotatable. Preferably but not visible in Figure 3C there is provided one roller on either side of the sleeve 23 As with the wear plate 27 the rollers 127A, 127B are of a suitable plastic and prevent metal to metal contact between the sleeve 23 and leg 15 and are dimensioned such that the surface of the rollers will be in contact with the leg, while the sleeve 23 is not in direct contact with the leg. Of course as with the wear plate, a bit of play between the rollers and the leg is present to allow assembly of the parts.

Additionally but not shown in the drawings the rotary crop tool can be attached to the main frame of the machine with two degrees of freedom such that the rotor and the carriage as a unit can better follow the contours of the terrain. This should not be mistaken to be hinge 11. Generally in such a machine at the end of arm 10 distanced from the frame 2 is provided an additional hingeable connection to the rotary tool.

In this document the terms roll and pitch are used to describe the attitude of the wheel with respect to the carriage or of the carriage with respect to the main frame. Typically the terrain on which the carriages of the agricultural machine move has contours in X-or roll axis direction and Y-or pitch axis direction. The vehicle will follow the roll and pitch of the terrain and by blocking the wheels from pitching thus the pitch variations of the terrain are translated by the wheels through the carriage to the crop working tools. The wheel mounting assembly allows rotation about the Z- or yaw axis, which indicated the steerability of the wheels.

It is thus believed that the assembly and construction of the present invention is apparent from the forgoing description. The invention is not limited to any embodiment herein described and, with the purview of the skilled person; modifications are possible which should be considered within the scope of the appended claims.

In this respect it is possible to have a single wheel mounted by the wheel assembly to the leg instead of a pair. In such an embodiment their will be only a single restraining arm needed in the restricting device.
In this respect many configurations of the chassis of the carriages are of course equally possible. Such configuration could maintain the general triangular lay-out of the wheels or not. For example in the triangular wheel lay-out the chassis can be Y shaped having the front pair of wheels connected to the stem and the rear wheels of the carriage to the diverging legs. Instead of having a fixed rear axle with un-steerable wheels the carriages can have a steerable rear wheels mounted similarly as the first pair of wheels with a ball joint and restraining device. Such a situation is advisable in a situation where the carriages are mounted such that the rear wheel axles do not correspond with the neutral line of the main frame of the rake. Of course in stead of wheel pairs single wheels can be used.

Alternatively it is also possible to have a chassis with a plurality of chassis legs like leg 15 which are positioned about a centre and similar to the rake arms 11 extend toward each rake 13. Each leg will have wheel mounting assembly by which at least one wheel is attached to it. Each running wheel is positioned as close as possible to the rake tines but without hindering the operation of the rake. Here also the running wheels can be used as pairs or as solitary wheels.

The term comprising when used in this description or the appended claims should not be construed in an exclusive or exhaustive sense but rather in an inclusive sense.

## Claims

1. An agricultural machine (1), such as a rake or a tedder, comprising one or more rotary crop working tools (9), the machine (1) further comprising,
- a main support frame (2),
- ground engaging support wheels (5, 6) for supporting the main support frame (2) on the ground;
- a carriage comprising a chassis (7, 8, 15) and a wheel mounting assembly connecting at least one running wheel (19, 20) to the chassis **characterized in that**
the wheel mounting assembly comprises
- a hinge (21) comprising at least a ball joint having three degrees of freedom, said hinge (21) being mounted to the chassis (7, 8, 15) and is operably connected to the at least one running wheel (19, 20) and
- a restraining device (22) that is connected to the hinge (21), wherein the restraining device (22) is arranged to limit, at least one of the three degrees of freedom of the ball joint of the hinge (21).

2. The machine (1) of claim 1, wherein the restraining device (22) limits pitching movements of the at least one running wheel (19, 20) relative to the chassis (7, 8, 15) and with respect to a horizontal axis extending parallel to the axis of rotation of the at least one running wheel.

3. The machine (1) of claim 1 or 2, wherein the chassis comprises a first chassis leg (15) and wherein the ball joint (21) is mounted to said leg (15) and the at least one running wheel (19,20) is mounted to said leg (15) spaced apart from the ball joint of the hinge (21).

4. The machine (1) of claim 3, wherein in a working position of the machine (1) the ball joint of the hinge (21) is located upstream of an axis of rotation of the at least one running wheel in a direction of travel of the machine (1).

5. The machine (1) of claim 3 or 4, wherein the ball joint is mounted to a distal end of said leg (15).

6. The machine (1) of any of the claims 1-5, wherein the restraining devices (22) comprises a sleeve (23) and at least one arm (24, 25), wherein the sleeve (23) is mounted about a portion of the chassis and the axis of rotation of the at least one running wheel is located between the sleeve (23) and the ball joint of the hinge (21) when seen in the direction of travel, and wherein the at least one arm (24, 25) is connected both to the ball joint and to the chassis.

7. The machine (1) of claim 6, wherein the portion of the chassis about which the sleeve (23) is mounted is the leg (15).

8. The machine (1) of any of the preceding claims, wherein the wheel mounting assembly connects a further running wheel (20) to the chassis and provides the further running wheel (20) with two degrees of freedom relative to the chassis, such that said running wheels (19, 20) form a pair having a common axis of rotation.

9. The machine (1) of claim 8, wherein the running wheels (19, 20) are rotatably mounted to the leg (15), wherein a single wheel (19, 20) is located on either side of said leg (15) when seen in a horizontal plane and wherein the restraining device (22) includes a further arm (24, 25) and each of the wheels is mounted to one of the arms (24, 25) such that the common axis of rotation is between the sleeve (23) and the ball joint of the hinge (21) when seen in the direction of travel.

10. The machine (1) of any of the preceding claims, wherein the chassis is connected to the main support frame (2) such that in operable condition the chassis has two degrees of freedom relative to the main support frame (2) and wherein only one of these degrees of freedom coincides with the two degrees of freedom of the at least one running wheel relative to the chassis.

11. The machine (1) of any of the preceding claims, wherein the the rotary crop tool (9) is connected to the main support frame (2, 3) and wherein the rotary crop tool (9) is connected to the chassis such that, in a working position, the chassis is disposed beneath the crop tool and the at least one running wheel contacts the ground.

12. The machine (1) of claim 11, wherein the rotary crop tool (9) in a working position thereof is rotatable about a substantial vertical axis of rotation.

13. The machine (1) of claim 11 or 12, wherein the rotary crop tool (9) includes crop working implements (13, 14) and wherein the running wheel (19, 20) is positioned adjacent the crop working implement (13, 14) without hindering operation of said implement.

14. The machine (1) of any of the preceding claims, comprising a plurality of wheel mounting assemblies connecting a plurality of running wheels to the chassis and wherein the chassis includes a plurality of legs each leg being provided with at least one wheel mounting assembly.

15. The machine (1) of any of the preceding claims, wherein the chassis (7,9,15) is connected to the main support frame by an arm (10), wherein the arm (10) is hingeably connected to the frame by a further hinge (11) such that the chassis can be put in a first or working position in which the running wheel is in contact with the ground and in a second or transport position in which the arm is rotated about the further hinge (11) and the chassis and the running wheel are positioned distanced from the ground.

## Patentansprüche

1. Landwirtschaftliche Maschine (1), wie ein Rechen oder ein Zettwender, umfassend ein oder mehrere drehbare Erntegutwerkzeuge (9), wobei die Maschine (1) des Weiteren umfasst:
- einen Haupttragerahmen (2);
- auf dem Boden stehende Trageräder (5, 6) zum Tragen des Haupttragerahmens (2) auf dem Boden;
- einen Wagen, welcher ein Fahrgestell (7, 8, 15) und eine Radbefestigungsvorrichtung umfasst, die wenigstens ein Laufrad (19, 20) mit dem Fahrgestell verbindet;
**dadurch gekennzeichnet, dass**
der Radbefestigungsaufbau umfasst
- ein Scharnier (21), welches wenigstens ein Kugelgelenk mit drei Freiheitsgraden umfasst, wobei das Scharnier (21) am Fahrgestell (7, 8, 15) angebracht ist und funktionsmäßig mit dem wenigstens einen Laufrad (19, 20) verbunden ist, und
- eine Rückhaltevorrichtung (22), welche mit dem Scharnier (21) verbunden ist, wobei die Rückhaltevorrichtung (22) angeordnet ist, um wenigstens einen der drei Freiheitsgrade des Kugelgelenks des Scharniers (21) zu begrenzen.

2. Maschine (1) nach Anspruch 1,
wobei die Rückhaltevorrichtung (22) die Nickbewegungen des wenigstens einen Laufrads (19, 20) relativ zum Fahrgestell (7, 8, 15) und in Bezug auf eine horizontale Achse, welche sich parallel zur Drehachse des wenigstens einen Laufrades erstreckt, begrenzt.

3. Maschine (1) nach Anspruch 1 oder 2,
wobei das Fahrgestell einen ersten Fahrgestellschenkel (15) umfasst und wobei das Kugelgelenk (21) auf dem Schenkel (15) angebracht ist und das wenigstens eine Laufrad (19, 20) an dem Schenkel (15) beabstandet vom Kugelgelenk des Scharniers (21) angebracht ist.

4. Maschine (1) nach Anspruch 3,
wobei in einer Arbeitsposition der Maschine (1) das Kugelgelenk des Scharniers (21) in eine Fahrtrichtung der Maschine (1) stromauf zu einer Drehachse des wenigstens einen Laufrads angeordnet ist.

5. Maschine (1) nach Anspruch 3 oder 4,
wobei das Kugelgelenk an einem fernen Ende des Schenkels (15) angebracht ist.

6. Maschine (1) nach einem der Ansprüche 1 bis 5,
wobei die Rückhaltevorrichtungen (22) eine Hülse (23) und wenigstens einen Arm (24, 25) umfassen, wobei die Hülse (23) um einen Abschnitt des Fahrgestells herum angebracht ist und die Drehachse des wenigstens einen Laufrads zwischen der Hülse (23) und dem Kugelgelenk des Scharniers (21) angeordnet ist, wenn in Fahrtrichtung gesehen, und wobei der wenigstens eine Arm (24, 25) sowohl mit dem Kugelgelenk als auch mit dem Fahrgestell verbunden ist.

7. Maschine (1) nach Anspruch 6,
wobei der Abschnitt des Fahrgestells, um welchen die Hülse (23) angebracht ist, der Schenkel (15) ist.

8. Maschine (1) nach einem der vorhergehenden Ansprüche,
wobei die Radbefestigungsvorrichtung ein weiteres Laufrad (20) mit dem Fahrgestell verbindet und das weitere Laufrad (20) mit zwei Freiheitsgraden relativ zum Fahrwerk ausstattet, so dass die Laufräder (19, 20) ein Paar mit einer gemeinsamen Drehachse ausbilden.

9. Maschine (1) nach Anspruch 8,
wobei die Laufräder (19, 20) drehbar an dem Schenkel (15) angebracht sind, wobei in einer horizontalen Ebene betrachtet ein einzelnes Rad (19, 20) an jeder Seite des Schenkels (15) angeordnet ist, und wobei die Rückhaltevorrichtung (22) einen weiteren Arm (24, 25) umfasst und jedes der Räder an einem der Arme (24, 25) so angebracht ist, dass in der Fahrrichtung betrachtet die gemeinsame Drehachse zwischen der Hülse (23) und dem Kugelgelenk des Scharniers (21) liegt.

10. Maschine (1) nach einem der vorhergehenden Ansprüche,
wobei das Fahrgestell mit dem Haupttragerahmen (2) verbunden ist, so dass im Betriebszustand das Fahrgestell zwei Freiheitsgrade relativ zum Haupttragerahmen (2) aufweist und wobei nur einer dieser Freiheitsgrade mit den zwei Freiheitsgraden des wenigstens einen Laufrades relativ zum Fahrgestell zusammenfällt.

11. Maschine (1) nach einem der vorhergehenden Ansprüche,
wobei das drehbare Erntegutwerkzeug (9) mit dem Haupttragerahmen (2, 3) verbunden ist und wobei das drehbare Erntegutwerkzeug (9) mit dem Fahrgestell so verbunden ist, dass in einer Arbeitsposition das Fahrgestell unterhalb des Erntegutwerkzeugs angeordnet ist und das wenigstens eine Laufrad mit dem Boden Kontakt hat.

12. Maschine (1) nach Anspruch 11,
wobei das drehbare Erntegutwerkzeug (9) in seiner Arbeitsposition drehbar um eine im Wesentlichen vertikale Drehachse ist.

13. Maschine (1) nach Anspruch 11 oder 12,
wobei das drehbare Erntegutwerkzeug (9) Erntegutbearbeitungsgeräte (13, 14) umfasst und wobei das Laufrad (19, 20) benachbart dem Erntegutbearbeitungsgerät (13, 14) positioniert ist, ohne den Betrieb des Geräts zu behindern.

14. Maschine (1) nach einem der vorhergehenden Ansprüche,
umfassend eine Mehrzahl von Radbefestigungsaufbauten, welche eine Mehrzahl von Laufrädern mit dem Fahrgestell verbinden und wobei das Fahrgestell eine Mehrzahl von Schenkeln umfasst, wobei jeder Schenkel mit wenigstens einer Radbefestigungsvorrichtung ausgestattet ist.

15. Maschine (1) nach einem der vorhergehenden Ansprüche,
wobei das Fahrgestell (7, 8, 15) mit dem Haupttragerahmen durch einen Arm (10) verbunden ist, wobei der Arm (10) gelenkig mit dem Rahmen durch ein weiteres Scharnier (11) verbunden ist, so dass das Fahrgestell in eine erste oder Arbeitsposition, in welcher das Laufrad mit dem Boden Kontakt hat, und in eine zweite oder Transportposition gebracht werden kann, in welcher der Arm um das weitere Scharnier (11) gedreht wird und das Fahrgestell und das Laufrad beabstandet zum Boden positioniert sind.

## Revendications

1. Machine agricole (1), telle qu'un râteau faneur ou une faneuse, comprenant un ou plusieurs outils de travail de récolte rotatifs (9), la machine (1) comprenant en outre
- un cadre de support principal (2),
- des roues de support en contact avec le sol (5, 6) destinées à supporter le cadre de support principal (2) sur le sol,
- un chariot comprenant un châssis (7, 8, 15) et un ensemble de montage de roue raccordant au moins une roue porteuse (19, 20) au châssis
**caractérisée en ce que**
l'ensemble de montage de roue comprend
- une articulation (21) comprenant au moins un joint à rotule présentant trois degrés de liberté, ladite articulation (21) étant montée sur le châssis (7, 8, 15) et étant raccordée fonctionnellement à l'au moins une roue porteuse (19, 20) et
- un dispositif de restriction (22) raccordé à l'articulation (21), dans laquelle le dispositif de restriction (22) est agencé pour restreindre au moins un des trois degrés de liberté du joint à rotule de l'articulation (21).

2. Machine (1) selon la revendication 1, dans laquelle le dispositif de restriction (22) restreint les mouvements de tangage de l'au moins une roue porteuse (19, 20) par rapport au châssis (7, 8, 15) et par rapport à un axe horizontal s'étendant parallèlement à l'axe de rotation de l'au moins une roue porteuse.

3. Machine (1) selon la revendication 1 ou 2, dans laquelle le châssis comprend une première jambe de châssis (15) et dans laquelle le joint à rotule (21) est monté sur ladite jambe (15) et l'au moins une roue porteuse (19, 20) est montée sur ladite jambe (15) espacée du joint à rotule de l'articulation (21).

4. Machine (1) selon la revendication 3, dans laquelle, dans une position de travail de la machine (1), le joint à rotule de l'articulation (21) est positionné en amont d'un axe de rotation de l'au moins une roue porteuse dans un sens de déplacement de la machine (1).

5. Machine (1) selon la revendication 3 ou 4, dans laquelle le joint à rotule est monté sur une extrémité distale de ladite jambe (15).

6. Machine (1) selon l'une quelconque des revendications 1 à 5, dans laquelle le dispositif de restriction (22) comprend un manchon (23) et au moins un bras (24, 25, dans laquelle le manchon (23) est monté autour d'une partie du châssis et l'axe de rotation de l'au moins une roue porteuse est positionné entre le manchon (23) et le joint à rotule de l'articulation (21) vu dans le sens de déplacement, et dans laquelle l'au moins un bras (24, 25) est raccordé à la fois au joint à rotule et au châssis.

7. Machine (1) selon la revendication 6, dans laquelle la partie du châssis autour de laquelle le manchon (23) est monté est la jambe (15).

8. Machine (1) selon l'une quelconque des revendications précédentes, dans laquelle l'ensemble de montage de roue raccorde une autre roue porteuse (20) au châssis et pourvoit l'autre roue porteuse (20) de deux degrés de liberté par rapport au châssis, de telle sorte que lesdites roues porteuses (19, 20) forment une paire présentant un axe de rotation commun.

9. Machine (1) selon la revendication 8, dans laquelle les roues porteuses (19, 20) sont montées rotatives sur la jambe (15), dans laquelle une seule roue (19, 20) est positionnée de chaque côté de ladite jambe (15) vu dans un plan horizontal, et dans laquelle le dispositif de restriction (22) comprend un autre bras (24, 25) et chacune des roues est montée sur un des bras (24, 25) de telle sorte que l'axe de rotation commun se situe entre le manchon (23) et le joint à rotule de l'articulation (21) vu dans le sens de déplacement.

10. Machine (1) selon l'une quelconque des revendications précédentes, dans laquelle le châssis est raccordé au cadre de support principal (2) de telle sorte que, dans un état de fonctionnement, le châssis présente deux degrés de liberté par rapport au cadre de support principal (2) et dans laquelle un seul de ces degrés de liberté coïncide avec les deux degrés de liberté de l'au moins une roue porteuse par rapport au châssis.

11. Machine (1) selon l'une quelconque des revendications précédentes, dans laquelle l'outil de récolte rotatif (9) est raccordé au cadre de support principal (2, 3) et dans laquelle l'outil de récolte rotatif (9) est raccordé au châssis de telle sorte que, dans une position de travail, le châssis soit disposé sous l'outil de récolte et l'au moins une roue porteuse soit en contact avec le sol.

12. Machine (1) selon la revendication 11, dans laquelle l'outil de récolte rotatif (9), dans sa position de travail, peut tourner autour d'un axe de rotation sensiblement vertical.

13. Machine (1) selon la revendication 11 ou 12, dans laquelle l'outil de récolte rotatif (9) comprend des instruments de travail de récolte (13, 14) et dans laquelle la roue porteuse (19, 20) est positionnée de manière adjacente à l'instrument de travail de récolte (13, 14) sans gêner le fonctionnement dudit instrument.

14. Machine (1) selon l'une quelconque des revendications précédentes, comprenant une pluralité d'ensembles de montage de roue raccordant une pluralité de roues porteuses au châssis et dans laquelle le châssis comporte une pluralité de jambes, chaque jambe étant pourvue d'au moins un ensemble de montage de roue.

15. Machine (1) selon l'une quelconque des revendications précédentes, dans laquelle le châssis (7, 9, 15) est raccordé au cadre de support principal par un bras (10), dans laquelle le bras (10) est raccordé de manière articulée au cadre par une autre articulation (11) de telle sorte que le châssis puisse être placé dans une première position ou position de travail dans laquelle la roue porteuse est en contact avec le sol, et dans une seconde position ou position de transport dans laquelle le bras est amené en rotation autour de l'autre articulation (11), et le châssis et la roue porteuse sont positionnés à une certaine distance du sol.
